# EUROPEAN PATENT SPECIFICATION

(11) **EP 2 732 490 B1**
(45) Date of publication and mention of the grant of the patent: **30.08.2017**
(21) Application number: 12810579.8
(22) Date of filing: 11.07.2012
(51) Int. Cl.: H01H 85/02, H01M 2/30, H01H 85/20, H01M 2/34, H01H 85/044

(54) **FUSE UNIT**
SICHERUNGSEINHEIT
FUSIBLE

(30) Priority: 11.07.2011 JP 2011153192
(43) Date of publication of application: 21.05.2014
(73) Proprietor: Yazaki Corporation, Tokyo 108-0073 (JP)
(72) Inventor: OHASHI, Norihiro, Makinohara-shi Shizuoka 421-0407 (JP); FUKUNAGA, Miyuki, Makinohara-shi Shizuoka 421-0407 (JP)
(74) Representative: Hoffmann Eitle
(86) International application number: PCT/JP2012/004477
(87) International publication number: WO 2013/008460

(56) References cited:
- JP-A- H1 141 751
- JP-A- 11 041 751
- JP-U- H0 515 297
- US-A- 5 716 243
- US-A- 5 877 609
- US-A- 5 877 609

## Description

### Technical Field

The present invention relates to a fuse unit, especially, a fuse unit which is installed for use with a battery of a vehicle and the like.

### Background Art

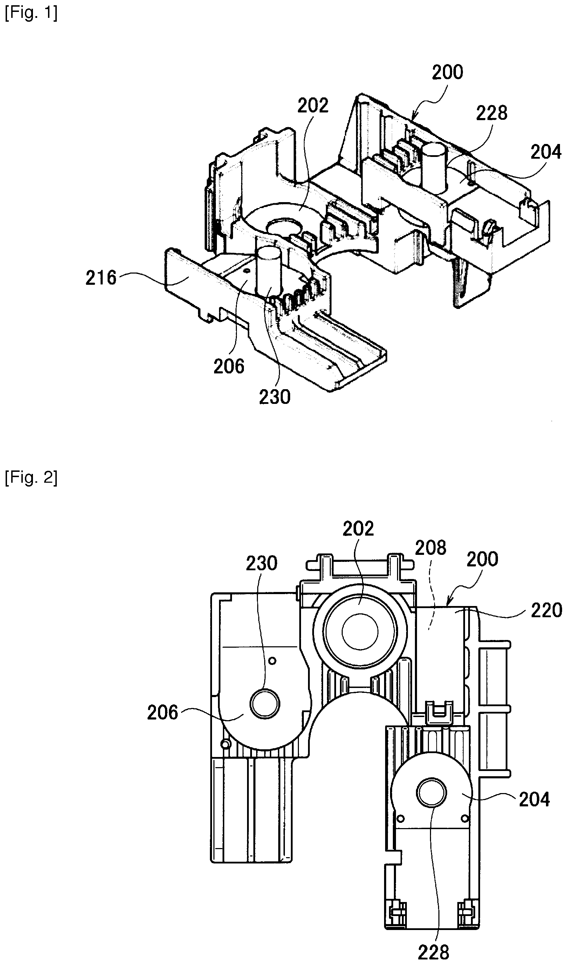

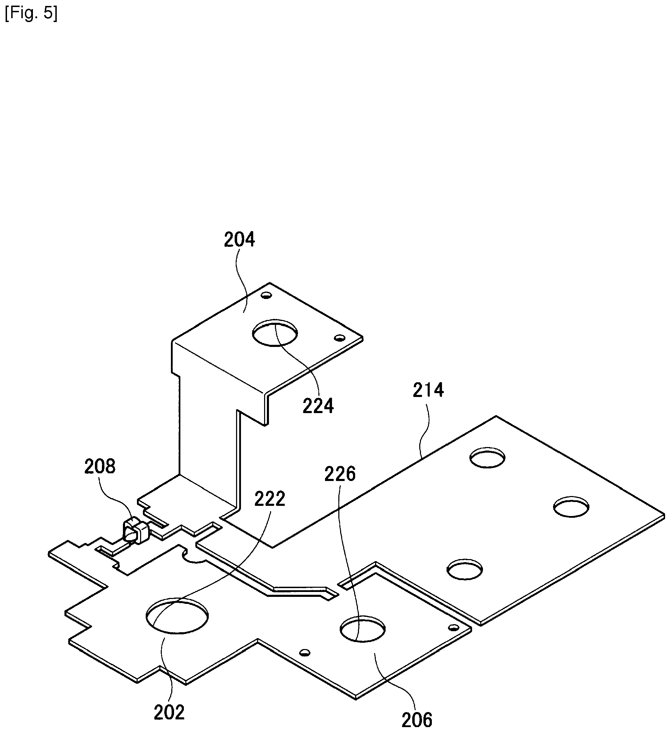

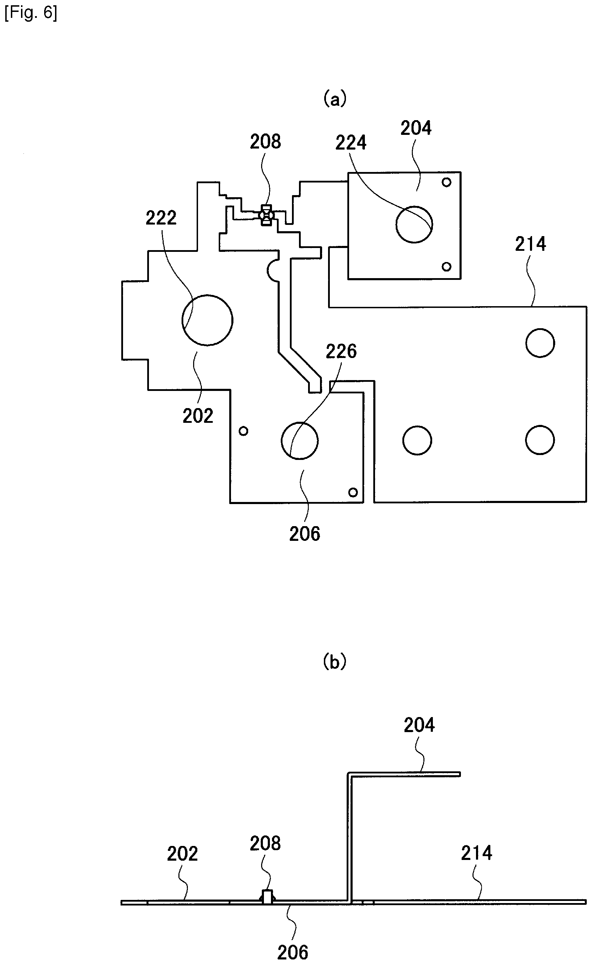

As illustrated in Figs. 1 to 4, a conventional fuse unit 200 includes a battery connection portion 202, a first external connection terminal 204, a second external connection terminal 206 and a fuse portion 208 (see Figs. 5 and 6), and is installed for use with a battery post 218 of a conventional battery 210 (for example, a DIN battery for vehicle) via a battery terminal 212 and a battery connection portion 202. In Figs. 1 to 4, the fuse portion 208 is covered with an element cover 220.

The conventional fuse unit 200 has such a structure that a resin body 216 is integrated with a busbar 214 illustrated in Figs. 5 and 6 by an insert molding. The busbar is provided with through holes 222, 224, and 226. The through hole 222 constitutes a part of a battery connection portion 202, the through hole 224 constitutes a part of the first external connection terminal 204, and the through hole 226 constitutes a part of the second external connection terminal 206.

A stud bolt 228 is inserted into the through hole 224, and the inserted stud bolt 228 is integrated with the busbar 214 by the resin body 216, to thereby form the first external connection terminal 204. Likewise, a stud bolt 230 is inserted into the through hole 226, and the inserted stud bolt 230 is integrated with the busbar 214, to thereby form the second external connection terminal 206.

As can be understood from Figs. 5 and 6, the battery connection portion 202 is connected with the first external connection terminal 204 via the fuse portion 208 while the battery connection portion 202 is directly connected with the second external connection terminal 206 instead of via the fuse portion 208.

Installing the conventional fuse unit 200 to the battery 210 is accomplished by engaging the conventional fuse unit 200 with the battery terminal 212 such that a stud bolt 232 of the battery terminal 212 installed to the battery post 218 passes through the through hole 222 of the battery connection portion 202, then by screwing a nut 234 over the stud bolt 232 and tightening the nut 234.

A rectangular recess portion 236 is formed at an edge portion of an upper face 240 of the battery 210. The battery post 218 stands from a bottom face 238 of the recess portion 236.

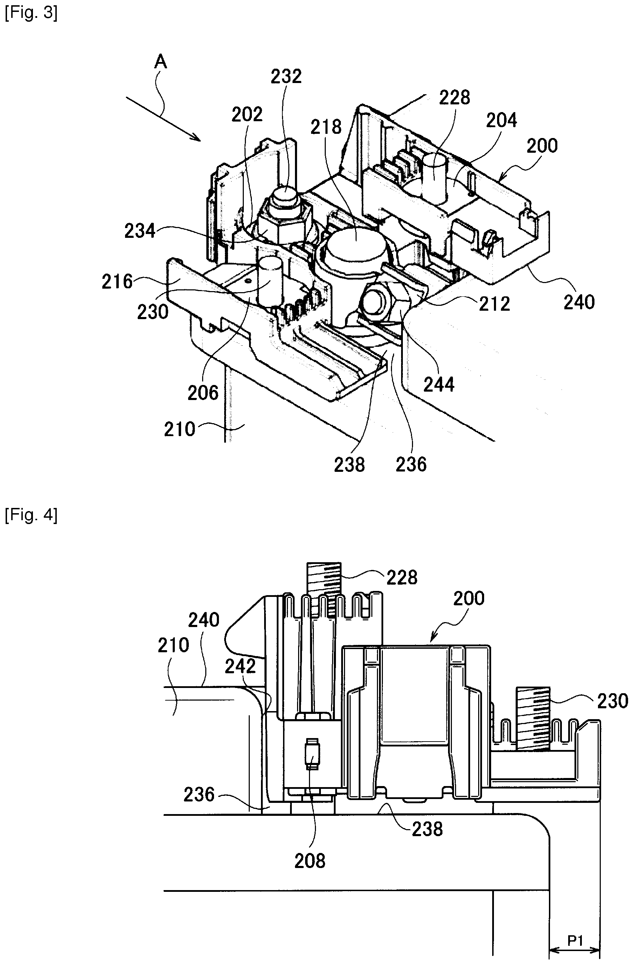

As illustrated in Figs. 3 and 4, in a state where the conventional fuse unit 200 is installed to the battery 210 via the battery terminal 212, the fuse portion 208, the element cover 220, and the second external connection terminal 206 are positioned between the bottom face 238 of the recess portion 236 and the upper face 240 of the battery 210 in a height direction, and the first external connection terminal 204 is positioned above the upper face 240 of the battery 210 in the height direction.

An electric wire (not illustrated) is connected to each of the first and second external connection terminals 204, 206 of the conventional fuse unit 200 installed to the battery 210 via the battery terminal 212, and the connected electric wire is so made as to extend outward substantially horizontally.

With the first external connection terminal 204 positioned above the upper face 240 of the battery 210, it is so made that the conventional fuse unit 200 can be installed over a small space of the battery 210. That is, positioning the first external connection terminal 204 above the upper face 240 of the battery 210 makes it easy to pull out the electric wire from the first external connection terminal 204.

PTL 1 and PTL 2 are given as documents related to the conventional fuse unit described above.

US 5,877,609 discloses a battery including a first electrical distribution block being electrically connected with the first battery terminal. The battery also includes a second electrical distribution block that is electrically isolated from the second terminal and that is electrically connected to the second battery terminal via a protection fuse. The first and second distribution blocks define multiple connection points where cables or other items of the electrical system may be electrically connected to the battery terminals. These connection points may be defined by threaded bores within the distribution blocks and companion set screws. Cables or other items may then be secured to the battery by advancing the set screw into the receiving bore.

JP H11 41751 A discloses a battery terminal that can be tightened onto a battery post. The battery post and the battery terminal are protected from outside damages by a fuse box with a cover.

### Citation List

### Patent Literature

PTL 1 : JP 2005-222709 A
PTL 2: JP 2010-192329 A

### Summary of Invention

Incidentally, with the conventional fuse unit 200, as illustrated in Figs. 3 and 4, installing the conventional fuse unit 200 to the battery 210 positions the fuse portion 208 within the recess portion 236 of the battery 210. Thus, it is necessary to provide, in the recess portion 236, a space for the fuse portion 208. And, when the space for the recess portion 236 is insufficient and the conventional fuse unit 200 is installed to the battery 210, a problem may arise that a part of the conventional fuse unit 200 (for example, the second external connection terminal 206) protrudes from a side face of the battery 210 (see reference sign PI in Fig. 4).

In view of the above problem, it is an object of the present invention to provide a fuse unit capable of reducing as much as possible a protrusion amount from a side face of a battery in the fuse unit for use with the battery having a battery post provided on a plane one step lower than an upper face of the battery.

According to a first aspect of the present invention, there is provided a combination of a fuse unit, a battery and a battery terminal with the features of claim 1.

The fuse unit is so configured as to be mounted to the battery via a battery terminal, and in a plan view of a state where the fuse unit is mounted to the battery via the battery terminal, the battery terminal is inclined to a side face of the battery.

The fuse unit unit may include two or more of the fuse portions and two or more of the external connection terminals. In this case, it is preferable that the respective fuse portions are so disposed as to be arranged in a predetermined direction, that the respective external connection terminals are so disposed as to be arranged in the predetermined direction, and that extension directions of wires connected to the respective external connection terminals are substantially parallel with each other.

Further, in this case, in a state where the fuse unit is mounted to the battery, the respective fuse portions may be arranged along a side face of the battery and the extension directions of the wires may be orthogonal to the side face.

According to the first aspect, in the fuse unit mounted for use with a battery having the battery post provided on a plane one step lower than the upper face of the battery, an advantage is accomplished that the fuse unit is capable of reducing as much as possible a protrusion amount from the side face of the battery when the fuse unit is installed to the battery.

### Brief Description of Drawings

[fig. 1] Fig. 1 is a perspective view of a conventional fuse unit.
[fig.2]Fig. 2 is a plan view of the conventional fuse unit.
[fig.3]Fig. 3 is a perspective view illustrating a state where the conventional fuse unit is installed to a conventional battery.
[fig.4]Fig. 4 is a view seen in a direction of an arrow A in Fig. 3.
[fig.5]Fig. 5 is a perspective view illustrating a busbar of the conventional fuse unit.
[fig.6]Fig. 6(a) is a plan view of the busbar of the conventional fuse unit and Fig. 6(b) is a front view of the busbar of the conventional fuse unit.
[fig.7]Fig. 7 is a plan view illustrating a schematic structure of a fuse unit according to an embodiment of the present invention.
[fig.8]Fig. 8 is a view seen in a direction of an arrow B in Fig. 7.
[fig.9]Fig. 9 is a view seen in a direction of an arrow C in Fig. 7.
[fig.10]Fig. 10 is a view seen in a direction of an arrow D in Fig. 7.
[fig.11]Fig. 11 is a perspective view of a busbar of the fuse unit according to the embodiment of the present invention.
[fig.12]Fig. 12(a) is a plan view of the busbar, Fig. 12(b) is a side view of the busbar, and Fig. 12(c) is a front view of the busbar.
[fig.13]Fig. 13 is a perspective view illustrating a state where the fuse unit according to the embodiment of the present invention is installed to a battery.
[fig.14]Fig. 14(a) is a plan view illustrating the state where the fuse unit is installed to the battery, Fig. 14(b) is a front view illustrating the state where the fuse unit is installed to the battery, and Figs. 14(c) and 14(d) are respectively side views illustrating the state where the fuse unit is installed to the battery.
[fig.15]Fig. 15 is an enlarged view of a part E in Fig. 13.
[fig.16]Fig. 16 is a perspective view of the fuse unit and the like illustrated in Fig. 15, viewed from another angle.
[fig.17]Fig. 17 is a plan view of the fuse unit and the like illustrated in Fig. 15, an enlarged view of a part F in Fig. 14(a).
[fig.18]Fig. 18(a) illustrates the state where the conventional fuse unit is installed to the battery, and Fig. 18(b) illustrates the state where the fuse unit according to the embodiment of the present invention is installed to the battery, a view corresponding to a part G in Fig. 14(b).
[fig.19]Fig. 19(a) illustrates the state where the conventional fuse unit is installed to the battery, and Fig. 19(b) illustrates the state where the fuse unit according to the embodiment of the present invention is installed to the battery, a view corresponding to a part F in Fig. 14(a).
[fig.20]Fig. 20 is a perspective view illustrating a fuse unit according to a modified example of the embodiment of the present invention, a view corresponding to Fig. 16.

### Description of Embodiments

A description is made below of an embodiment of the present invention with reference to the drawings.

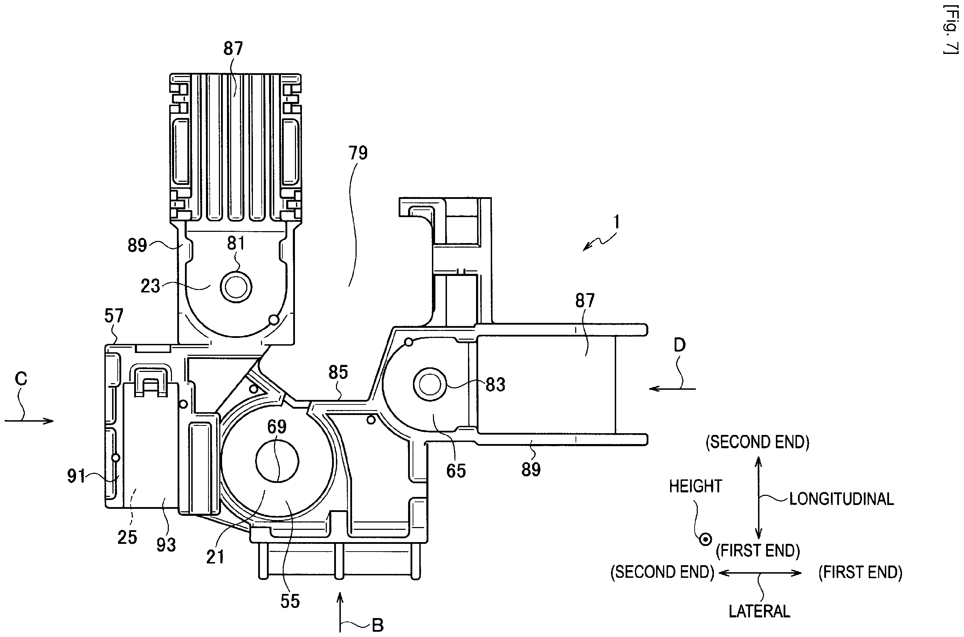

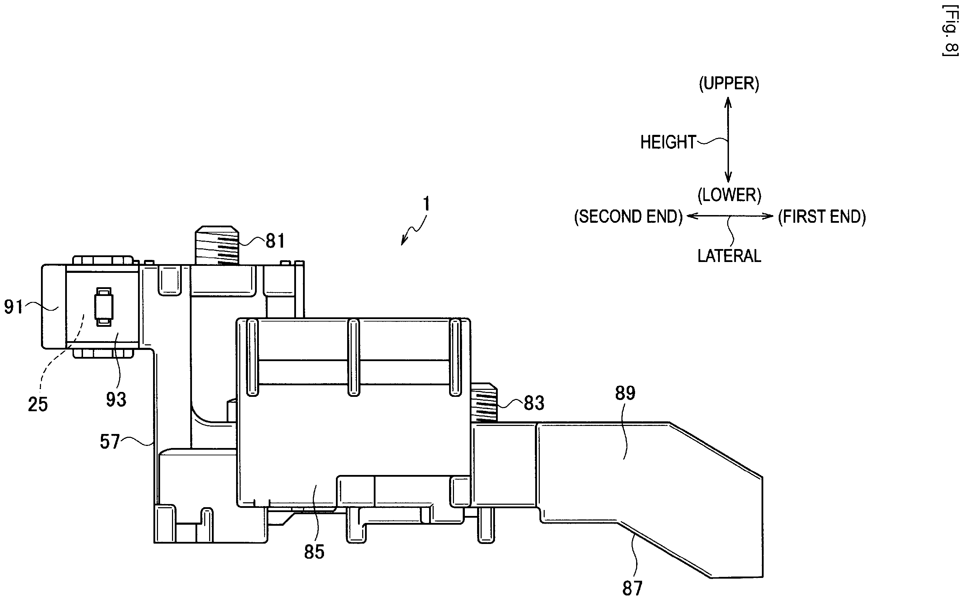

With reference to Figs. 7 to 19, a fuse unit 1 (fuse body) according to the embodiment of the present invention will be explained.

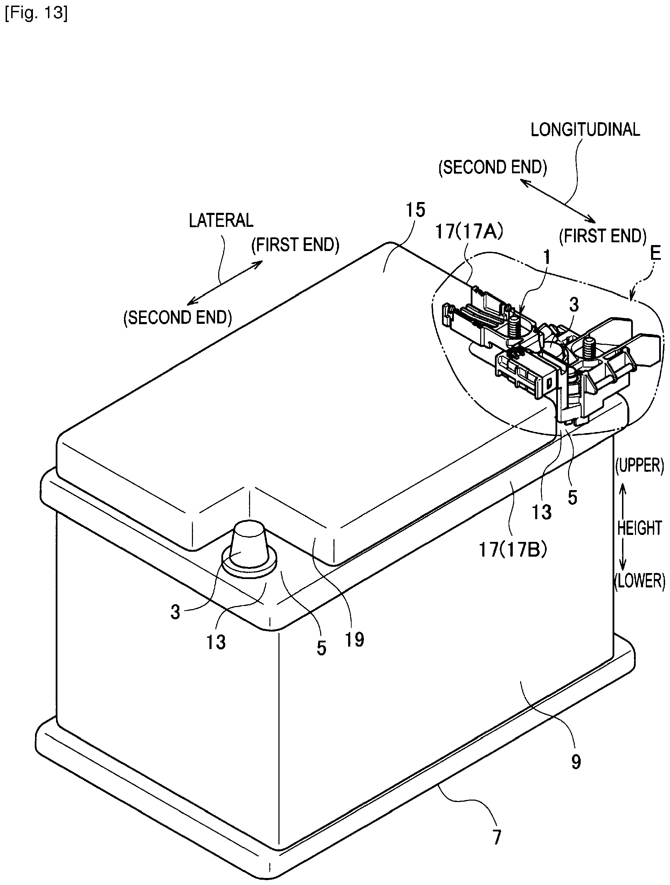

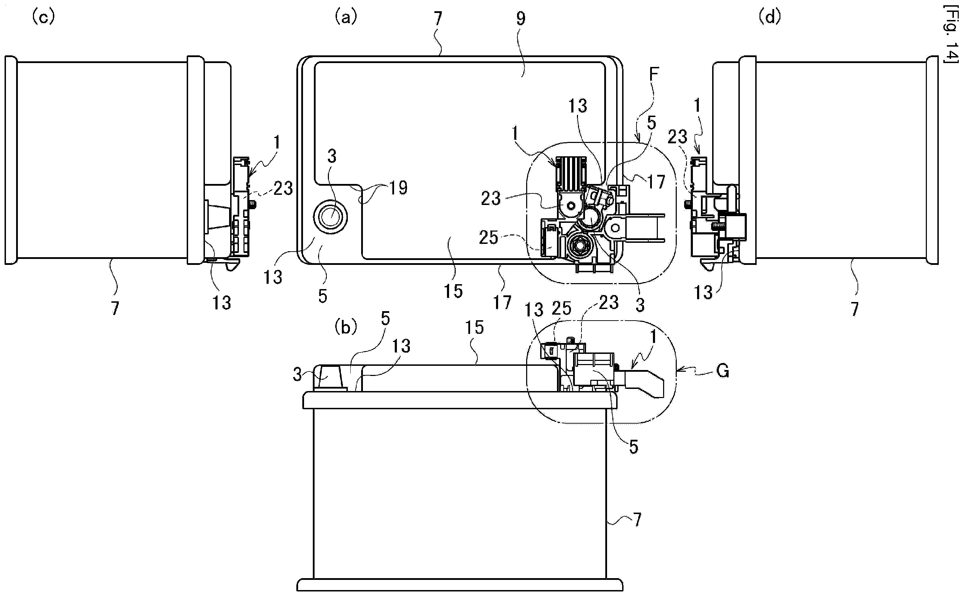

As illustrated in Figs. 13 and 14, the fuse unit 1 according to the embodiment is mounted for use with a battery 7 (such as a DIN battery for vehicle having a structure same as that of the conventional battery 210) which has such a structure that a battery post 3 is disposed at a recess portion 5 which is one step lower than an upper face 15.

The battery 7 includes a rectangular battery body 9 and a pair of battery posts 3. Each of two edge portions positioned at upper side of the rectangular battery body 9 has a resecc portion 5. The recess portion 5 is in a form of a rectangle which is smaller than the battery body 9.

A bottom face 13 of each recess portion 5 is positioned below the upper face 15 of the battery body 9 by a predetermined distance and is so made as to be parallel to the upper face 15 of the battery body 9.

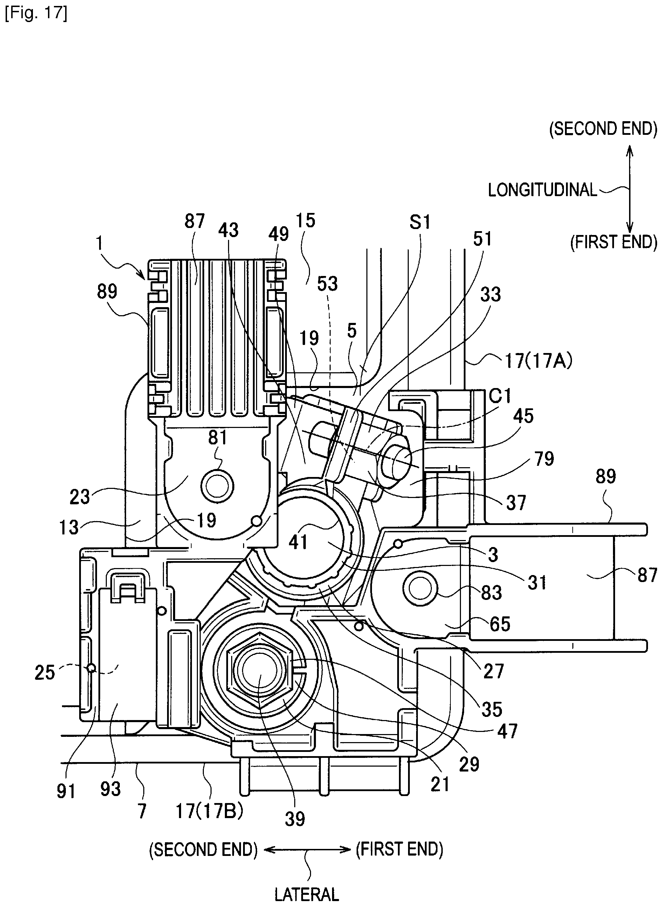

Each of the battery posts 3 is in a form of a circular truncated cone or a circular cylinder and is so provided as to stand from the bottom face 13 of each of the two recess portions 5. With such a structure, each of the battery posts 3 is provided in a position one step lower than the upper face 15 of the battery body 9. A height of each of the battery posts 3 is substantially the same as the depth of the recess portion 5. Each of the battery post 3 is provided at a position away from a side face 17 of the battery body 9 by a first predetermined distance and away from a side face 19 of the recess portion 5 by a second predetermined distance (see Figs. 14(a), 17 and the like).

The fuse unit 1 is installed for use with one of the battery posts 3. As illustrated in Figs. 7 and the like, the fuse unit 1 includes a battery connection portion 21, a first external connection terminal 23, and a fuse portion 25.

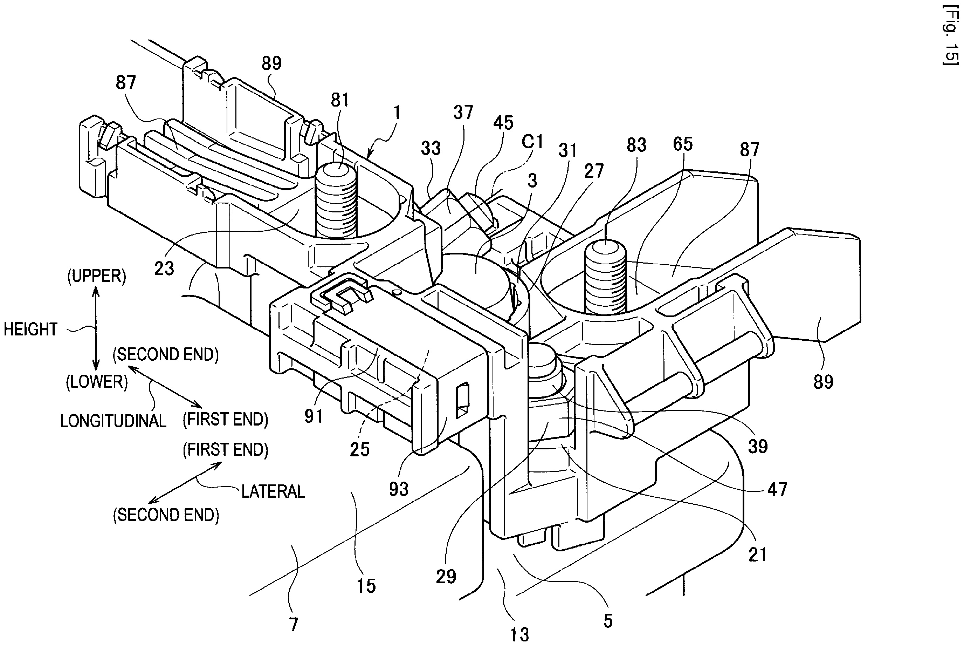

The battery connection portion 21 is connected to the battery post 3 via, for example, a battery terminal 27 which will be described later. A large-capacity electric instrument such as an alternator of the vehicle, for example, is connected to the first external connection terminal 23. When the battery connection portion 21 is connected to the battery post 3 (that is, when the fuse unit 1 is mounted to the battery 7), as illustrated in Figs. 15, 17 and the like, the first external connection terminal 23 is positioned above the upper face 15 of the battery body 9 and is positioned within the periphery of the battery 7 in plan view.

The fuse portion 25 is disposed between the battery connection portion 21 and the first external connection terminal 23 and allows the battery connection portion 21 and the first external connection terminal 23 to be electrically and mechanically connected with each other. When the battery connection portion 21 is connected to the battery post 3, as illustrated in Figs. 15, 17 and the like, the fuse portion 25 is positioned above the upper face 15 of the battery body 9 and is positioned within the periphery of the battery 7 in plan view.

In the plan view of the state where the fuse unit 1 is mounted to the battery 7, as illustrated in Figs. 14(a), 17, and the like, the battery connection portion 21 is, as a matter of course, positioned within the periphery of the battery 7 and at the recess portion 5, and most part of the fuse unit 1 is positioned within the periphery of the battery 7 (either within the recess portion 5 or within the upper face 15 of the battery body 9 other than the recess portion 5).

Further, in the plan view of the state where the fuse unit 1 is mounted to the battery 7, the first external connection terminal 23 is positioned within the recess portion 5 and the fuse portion 25 is positioned outside the recess portion 5. However, alternatively, the fuse portion 25 may be positioned within the recess portion 5 and the first external connection terminal 23 may be positioned outside the recess portion 5; the first external connection terminal 23 and fuse portion 25 may be positioned within the recess portion 5; or the first external connection terminal 23 and fuse portion 25 may be positioned outside the recess portion 5.

The fuse portion 25 is so made as to be fused by heat when a current having more than or equal to a predetermined value flows between the battery connection portion 21 and the first external connection terminal 23 for a predetermined time.

As illustrated in Figs. 15 to 17 and the like, the fuse unit 1 is so configured as to be integrally mounted to the battery 7 via the battery terminal 27 which is integrally provided to the battery post 3.

In the plan view of the state where the fuse unit 1 is mounted to the battery 7 via the battery terminal 27, as illustrated in Figs. 17 and the like, the battery terminal 27 is inclined to the side face 17 of the battery body 9. This is for facilitating installing of the battery terminal 27 to the battery 7 and for suppressing as much as possible a protruding amount of the fuse unit 1 (a protruding amount, in plan view, from the side face 17 of the battery body 9 or from the recess portion 5) which is mounted to the battery 7.

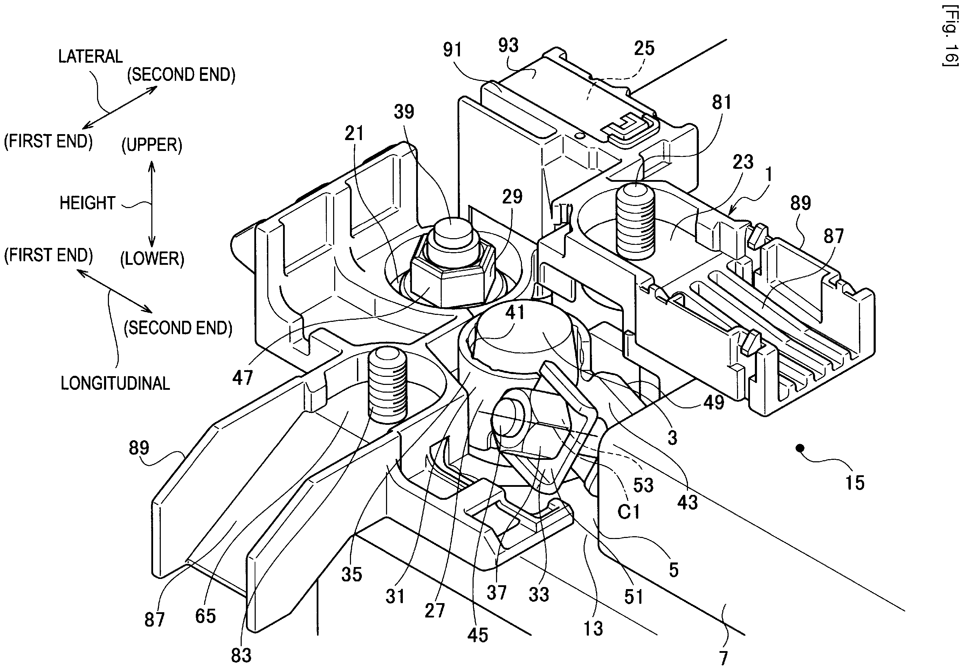

As illustrated in Figs. 16, 17 and the like, the battery terminal 27 is made of a conductive material such as metal, and includes a fuse unit joint portion 29, a battery post joint portion 31, and a tightening portion 33.

It is so configured that the battery connection portion 21 of the fuse unit 1 is connected to the fuse unit joint portion 29. The battery post joint portion 31 is so configured as to be joined to the battery post 3 when the battery terminal 27 is installed to the battery 7. The tightening portion 33 is used when the battery terminal 27 is installed to the battery 7 and is responsible for attaching the battery terminal 27 to the battery post 3 and detaching the battery terminal 27 from the battery post 3.

That is, it is so made that carrying out a proper operation of the tightening portion 33 allows the battery terminal 27 to be integrally installed to the battery post 3 and carrying out another proper operation of the tightening portion 33 allows the battery terminal 27 to be detached from the battery post 3. For example, it is so made that the tightening portion 33 includes a screw and tightening the screw allows the battery terminal 27 to be integrally installed to the battery post 3 and releasing the screw allows the battery terminal 27 to be detached from the battery post 3.

The fuse unit joint portion 29, the battery post joint portion 31, and the tightening portion 33 are arranged in this order in a longitudinal direction of the battery terminal 27 (battery terminal body portion 35). That is, the fuse unit joint portion 29 is positioned at a first end of the battery terminal body portion 35, the battery post joint portion 31 is positioned in the middle of the battery terminal body portion 35, and the tightening portion 33 is positioned at a second end of the battery terminal body portion 35.

In a state where the battery terminal 27 is installed to the battery post 3, the longitudinal direction of the battery terminal 27 is made to be horizontal. In the plan view of the state where the battery terminal 27 is installed to the battery post 3, the longitudinal direction of the battery terminal 27 is inclined to the side face 17 of the rectangular battery body 9.

For further explanation, in the plan view of the state where the battery terminal 27 is installed to the battery post 3, the rectangular recess portion 5 is formed at one edge of the battery body 9 and the battery post 3 is disposed within the recess portion 5 (in substantially the center of the recess portion 5).

Further, in the plan view of the state where the battery terminal 27 is installed to the battery post 3, a distance from a first side (one side face) 17A of the rectangular battery 7 to the tightening portion 33 is smaller than the distance from the first side 17A of the battery 7 to the battery post 3. In other words, the tightening portion 33 is present near one (i.e., side 17A) of the two sides (two side faces) 17A, 17B extending from one edge of the rectangular battery 7. Further, a distance from a second side 17B of the two sides (two side faces) 17A, 17B extending from the one edge of the rectangular battery 7 to the tightening portion 33 is made larger than the distance from the second side 17B to the battery post 3.

An axis C1 of a screw as part of the tightening portion 33 extends diagonally relative to the upper face 15 of the battery 7 (the bottom face 13 of the recess portion 5). An operating portion 37 (for example, a nut as part of the tightening portion 33) which is engaged with a tool when the tightening portion 33 is operated is positioned at an upper side of the other part of the tightening portion 33 than the operating portion 37 and is positioned near the first side 17A.

More specifically, the fuse unit joint portion 29 of the battery terminal 27 includes a stud bolt 39 integrally provided with the battery terminal body portion 35, and the battery post joint portion 31 of the battery terminal 27 includes a circular truncated cone through hole 41 (same as the battery post 3 in configuration) formed at the battery terminal body portion 35.

The tightening portion 33 of the battery terminal 27 includes a stud bolt 45, a nut 37, and a gap 43. The gap 43 is provided from the battery post joint portion 31 to the other end of the battery terminal body portion 35. With such a configuration, a first portion 49 and a second portion 51 which is separated away from the first portion 49 by the gap 43 are formed between the battery post joint portion 31 and the other end of the battery terminal body portion 35.

The stud bolt 45 is integrally provided to the first portion 49. The stud bolt 45 passes through a through hole 53 formed at the second portion 51 and protrudes outwardly from the second portion 51. The nut 37 is screwed to the stud bolt 45 protruding outwardly from the second portion 51. When the nut 37 is loosened, the inner diameter of the battery post joint portion 31 (through hole 41) is slightly larger than the outer diameter of the battery post 3. Meanwhile, when the nut 37 is tightened, the inner diameter of the battery post joint portion 31 (through hole 41) becomes smaller, and the battery post joint portion 31 presses the battery post 3 and thus the battery terminal 27 is integrally installed to the battery post 3.

In the state where the battery terminal 27 is installed to the battery post 3, the stud bolt 39 of the fuse unit joint portion 29 is perpendicular to the upper face 15 of the battery 7 and stands on the upper side of the battery terminal body portion 35. Further, in the state where the battery terminal 27 is installed to the battery post 3, the axis C1 of the stud bolt 45 of the tightening portion 33 extends diagonally relative to the upper face 15 of the battery 7. In other words, the axis C1 of the stud bolt 45 of the tightening portion 33 extends diagonally upward from the first portion 49 of the battery terminal 27, passes through the second portion 51 and extends diagonally upward from the second portion 51.

In the plan view of the state where the battery terminal 27 is installed to the battery post 3, the axis C1 of the stud bolt 45 of the tightening portion 33 extends in the direction perpendicular to the longitudinal direction of the battery terminal body portion 35, and the nut 37 is provided at a position closer to the first side face 17A of the battery body 9 than the position of the stud bolt 45 that is engaged with the first portion 49.

Herein, an explanation will be made in more detail about the fuse unit 1.

For convenience of the explanation, one predetermined direction of the battery 7 or fuse unit 1 which direction is horizontal is defined as a lateral direction, and the other predetermined direction of the battery 7 or fuse unit 1 which direction is horizontal and orthogonal to the lateral direction is defined as a longitudinal direction. Further, a direction orthogonal to the lateral and longitudinal directions is defined as a height direction.

As illustrated in Figs. 7 and the like, the fuse unit 1 is so configured as to include a busbar 55 and a resin body 57.

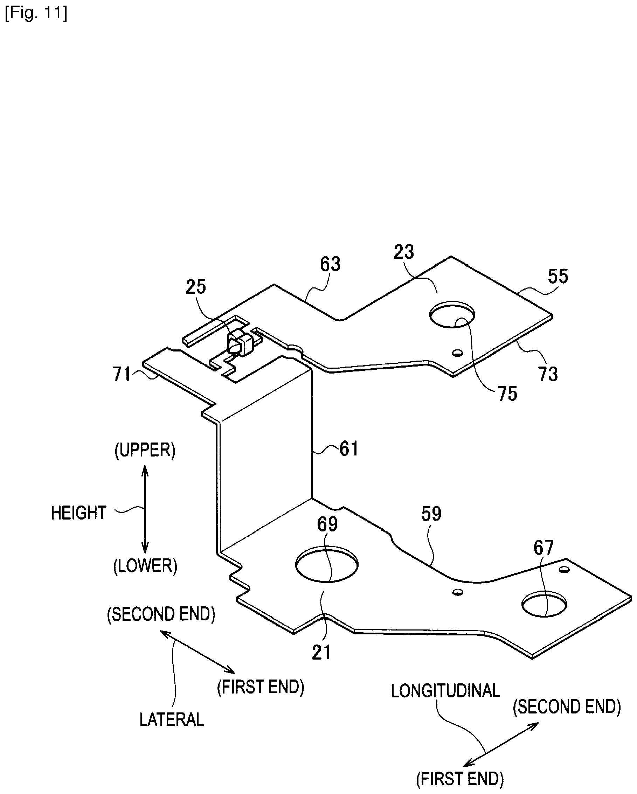

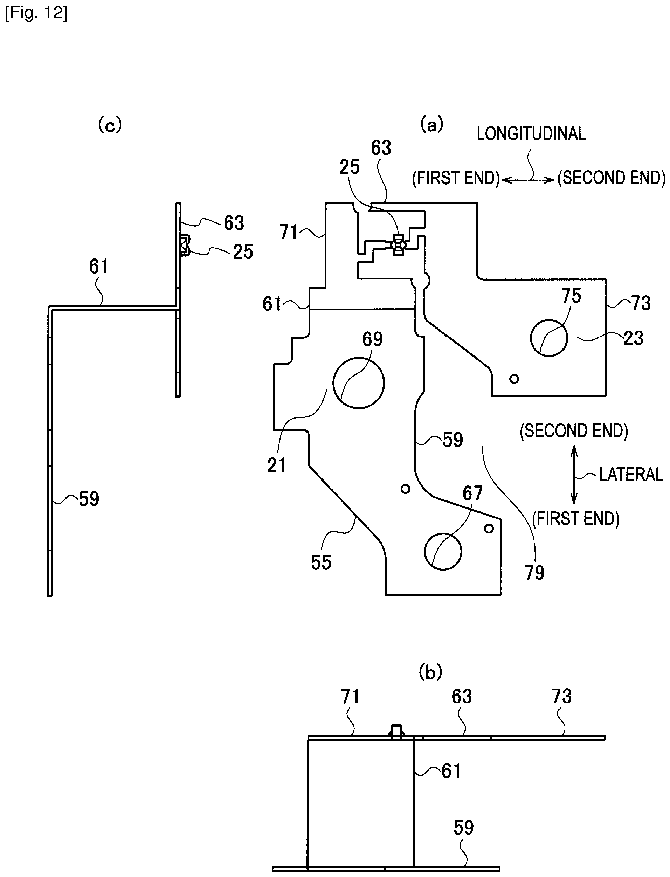

As illustrated in Figs. 11, 12 and the like, the busbar 55 is formed into a crank by subjecting a flat plate made of a conductive material such as metal to machining, for example, punching into a predetermined configuration, and then by bending the thus punched workpiece. Specifically, the busbar 55 is formed into a crank when viewed from the longitudinal direction, except for a part of a second upper plate portion 73, which will be described in more detail later.

The busbar 55 includes a flat bottom plate portion 59, a flat standing portion 61, and a flat upper plate portion 63. On a first end side in the lateral direction of the bottom plate portion 59, there is formed an external terminal through hole 67 as part of a second external connection terminal 65 which will be described later. On a second end side in the lateral direction of the bottom plate portion 59, there is formed a battery terminal through hole 69 as part of the battery connection portion 21.

The standing portion 61 is orthogonal to the bottom plate portion 59 and stands from the second end in the lateral direction of the bottom plate portion 59. The upper plate portion 63 is orthogonal to the standing portion 61 and is parallel to the bottom plate portion 59. Further, the upper plate portion 63 extends from an upper end of the standing portion 61 to a second end in the longitudinal direction. Thus, the busbar 55 is in a form of a crank when viewed from the longitudinal direction.

The upper plate portion 63 includes a first upper plate portion 71, the fuse portion 25, and the second upper plate portion 73. The first upper plate portion 71 is positioned on the first end side in the longitudinal direction and is connected to the standing portion 61. The second upper plate portion 73 is positioned on the second end side in the longitudinal direction and is connected to the first upper plate portion 71 via only the fuse portion 25. In the second upper plate portion 73, there is formed an external terminal through hole 75 as part of the first external connection terminal 23.

In the plan view of the busbar 55, as illustrated in Fig. 12(a), the external terminal through hole 67 as part of the second external connection terminal 65, the battery terminal through hole 69 as part of the battery connection portion 21, the external terminal through hole 75 as part of the first external connection terminal 23, and the fuse portion 25 are arranged in this order from the first end toward the second end in the lateral direction.

Further, in the plan view of the busbar 55, as illustrated in Fig. 12(a), the battery terminal through hole 69 as part of the battery connection portion 21, the fuse portion 25, the external terminal through hole 67 as part of the second external connection terminal 65, and the external terminal through hole 75 as part of the first external connection terminal 23 are arranged in this order from the first end toward the second end in the longitudinal direction.

Further, in the plan view of the busbar 55, as illustrated in Fig. 12(a), the busbar 55 is constructed to a substaintially U-like shape, and the bottom plate portion 59 and the second upper plate portion 73 of the upper plate portion 63 in combination form a concave portion 79 (concave portion formed at the second end side in the longitudinal direction in the center portion in the lateral direction).

The resin body 57 is made of an insulative synthetic resin, and is integrated with the busbar 55 by, for example, an insert molding. Providing the resin body 57 to the busbar 55 with the stud bolts 83, 81 respectively installed to the external terminal through holes 67, 75 integrates the stud bolts 83, 81 with the busbar 55 in a state where the stud bolts 83, 81 of the respective external terminal through holes 67, 75 are conductive with the busbar 55.

The resin body 57 is provided to the busbar 55 such that the stud bolts 83, 81 installed to the respective external terminal through holes 67, 75, the external terminal through holes 67, 75 and surroundings thereof (part of an upper face of the bottom plate portion 59 and part of an upper face of the upper plate portion 63), the battery terminal through hole 69 and surroundings thereof (part of upper and lower faces of the bottom plate portion 59 and upper plate portion 63), and the fuse portion 25 and surroundings thereof allow the busbar 55 to be exposed (see Figs. 7 and the like).

With the above structure, the stud bolt 83 installed to the external terminal through hole 67 of the bottom plate portion 59 and the surroundings of the external terminal through hole 67 form the second external connection terminal 65, the stud bolt 81 installed to the external terminal through hole 75 of the upper plate portion 63 and the surroundings of the external terminal through hole 75 form the first external connection terminal 23, and the surroundings of the battery terminal through hole 69 form the battery connection portion 21.

As illustrated in Figs. 7 and the like, the fuse unit 1 formed by providing the resin body 57 and the like to the busbar 55 is constructed to a substantially U-like shape (U-like shape formed with the concave portion 79) in a plan view, like the busbar 55, and is formed into a substantially crank when viewed from the longitudinal direction.

The resin body 57 includes a body portion 85, wire placing portions 87, protective wall portions 89, and an element cover providing portion 91.

As mentioned above, the body portion 85 is directly engaged with the busbar 55 to form the fuse unit 1 into the substantially U-like shape and into the crank. Each of the wire placing portions 87 is a portion on which wires (not illustrated) extending from the first and second external connection terminals 23, 65 are placed, and is formed at each of the first external connection terminal 23 and the second external connection terminal 65.

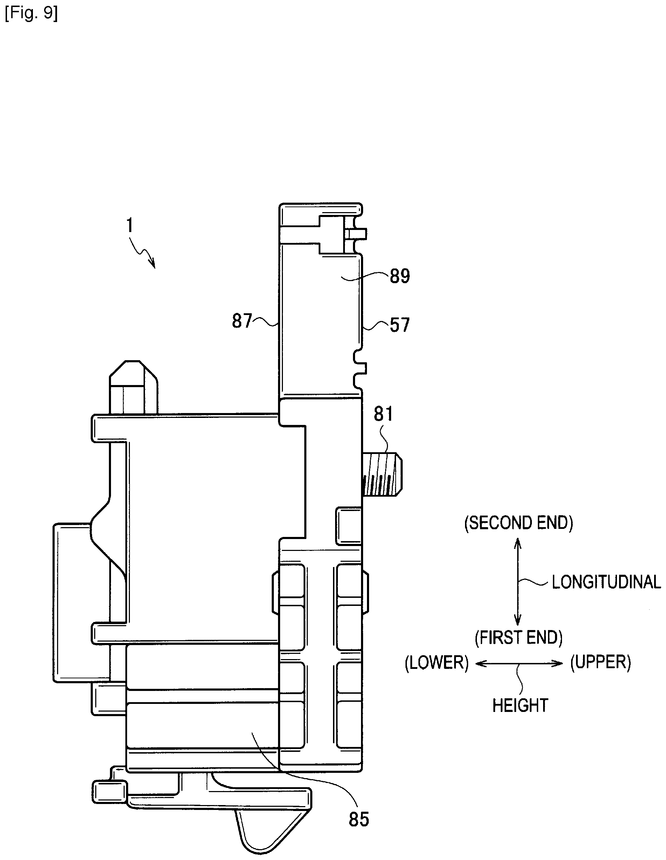

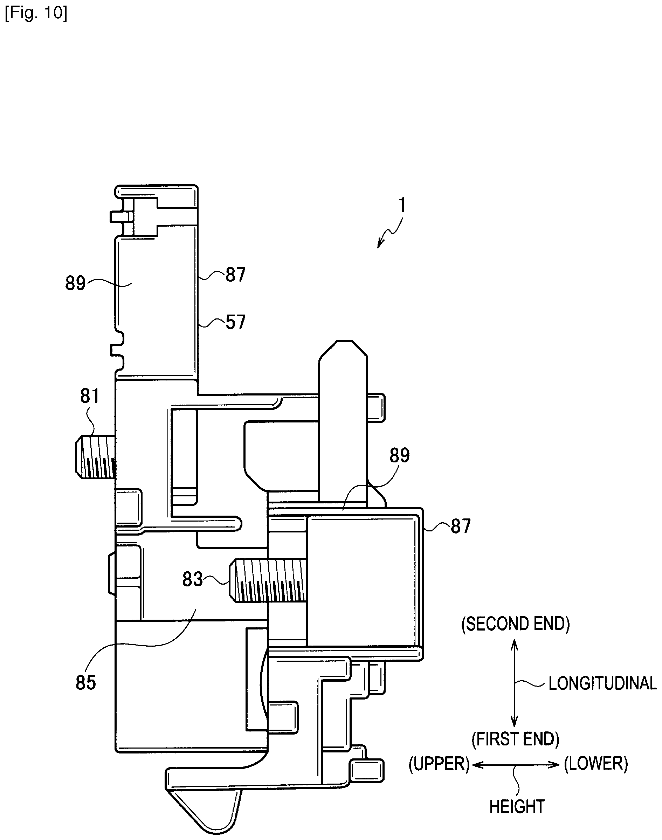

Each of the wire placing portions 87 is formed into a flat plate. One of the wire placing portions extends horizontally from the first external connection terminal 23 (see Figs. 9 and 10), and the other of the wire placing portions extends from the second external connection terminal 65 with a slight inclination (extending with an inclination so as to be positioned lower as the wire placing portion 87 is distanced away from the second external connection terminal 65).

As illustrated in Figs. 7 and the like, the wire placing portion 87 of the first external connection terminal 23 extends from the first external connection terminal 23 to the second end side in the longitudinal direction. The wire placing portion 87 of the second external connection terminal 65 extends from the second external connection terminal 65 to the first end side in the lateral direction.

The protective wall portions 89 protect the wires (for example, electric wires) extending from the first and second external connection terminals 23, 65 from being damaged which damage may be caused when the wires contact other portions. One of the protective wall portions 89 is disposed at the first external connection terminal 23 and the wire placing portion 87. The protective wall portion 89 of the first external connection terminal 23 is formed into a substaintially U-like shape in plan view, and stands from a semicircular outer periphery of the first external connection terminal 23 (semicircular outer periphery opposite to the wire placing portion 87 side) and from both ends of the wire placing portion 87 by a predetermined height (for example, slightly higher than an outer diameter of the wire connected to the first external connection terminal 23). The protective wall portion 89 of the second external connection terminal 65 has the configuration similarly as that of the protective wall portion 89 of the first external connection terminal 23.

The element cover providing portion 91 is formed around the fuse portion 25, and it is so made that providing the element cover 93 (for example, an element cover made of a transparent resin and formed into a substaintially U-like shape by bending a rectangular flat plate perpendicularly at two portions) to the element cover providing portion 91 covers the fuse portion 25. Then, it is so made that even if the fuse portion 25 is broken due to fusing and the like when the fuse unit 1 is being used, wreckage caused by the breakage does not scatter to outside of the element cover 93. Further, the element cover 93 can prevent adhesion of dust or water drop to the fuse portion 25 from outside of the fuse unit 1, when the fuse unit 1 is being used.

Hereinafter, installing and the like of the fuse unit 1 to the battery 7 will be explained.

First, the battery terminal 27 is installed to the battery post 3 of the battery 7.

Before the installing of the battery terminal 27 to the battery post 3, the nut 37 of the battery terminal 27 should have been loosened. Then, the battery terminal 27 is engaged with the battery post 3 in such a manner that the battery post 3 enters the battery post joint portion 31. Then, tightening the nut 37 of the tightening portion 33 completes the setting of the battery terminal 27 to the battery post 3.

As mentioned above, in the plan view of the state where the battery terminal 27 is installed to the battery post 3, the battery terminal 27 is made to be inclined. Further, in the state where the battery terminal 27 is installed to the battery post 3, the battery terminal 27 is positioned between the bottom face 13 of the recess portion 5 of the battery 7 and the upper face 15 of the battery 7 in the height direction, and the stud bolt 39 of the battery terminal 27 as part of the fuse unit joint portion 29 protrudes upward from the battery terminal body portion 35. The upper end of the stud bolt 39 of the battery terminal 27 is positioned at a height substantially same as the upper face 15 of the battery 7.

Then, the fuse unit 1 is installed to the battery terminal 27.

The fuse unit 1 is caused to be engaged with the battery terminal 27 in such a manner that the stud bolt 39 of the battery terminal 27 passes through the battery terminal through hole 69 of the battery connection portion 21, and the nut 47 is screwed to the stud bolt 39 of the battery terminal 27, to thereby tighten the nut 47. Then, the fuse unit 1 is integrally installed to the battery terminal 27.

In the plan view of the state where the fuse unit 1 is installed to the battery 7 via the battery terminal 27, as illustrated in Figs. 17 and the like, all parts of the battery terminal 27 and most parts of the fuse unit 1 are positioned within the periphery of the battery 7. For example, the first external connection terminal 23, the wire placing portion 87 and protective wall portion 89 of the first external connection terminal 23, the fuse portion 25, the element cover providing portion 91, the element cover 93, the battery connection portion 21, and the second external connection terminal 65 are positioned within the periphery of the battery 7. Meanwhile, part of the wire placing portion 87 and part of the protective wall portion 89 of the second external connection terminal 65 protrude to the outside of the battery 7 from the first end (first side face 17A) in the lateral direction of the battery 7.

In the plan view of the state where the fuse unit 1 is installed to the battery 7 via the battery terminal 27, as illustrated in Fig. 17, the battery post joint portion 31 (battery post 3) of the battery terminal 27 and the tightening portion 33 of the battery terminal 27 can be seen through the concave portion 79 of the fuse unit 1.

With the above structure, inserting a tool into the concave portion 79 of the fuse unit 1 can accomplish releasing or tightening of the nut 37 of the battery terminal 27. And, after the fuse unit 1 is installed to the battery 7 via the battery terminal 27, the battery terminal 27 and the fuse unit 1 can be dismounted from the battery 7 in a state that the battery terminal 27 is integrated with the fuse unit 1. Further, after the fuse unit 1 is installed to the battery terminal 27, the battery terminal 27 and the fuse unit 1 can be installed to the battery 7.

Further, in the plan view of the state where the fuse unit 1 is installed to the battery 7 via the battery terminal 27, as illustrated in Fig. 17, the second external connection terminal 65, the battery connection portion 21, the first external connection terminal 23, and the fuse portion 25 are arranged in this order from the first end side to the second end side in the lateral direction.

Further, in the plan view of the state where the fuse unit 1 is installed to the battery 7 via the battery terminal 27, as illustrated in Fig. 17, the battery connection portion 21, the fuse portion 25, the second external connection terminal 65, and the first external connection terminal 23 are arranged in this order from the first end side to the second end side in the longitudinal direction.

Further, in the plan view of the state where the fuse unit 1 is installed to the battery 7 via the battery terminal 27, as illustrated in Fig. 17, the battery connection portion 21 and the fuse unit 1 are positioned near the second side face 17B (a side face positioned on the first end side in the longitudinal direction) of the battery 7, and the second external connection terminal 65 is positioned near the first side face 17A (a side face positioned on the first end side in the lateral direction) of the battery 7. Further, the wire placing portion 87 of the second external connection terminal 65 and the protective wall portion 89 which stands from the wire placing portion 87 of the second external connection terminal 65 protrude from the first end portion (first side face 17A) of the battery 7. Meanwhile, the wire placing portion 87 and protective wall portion 89 of the first external connection terminal 23 extend from the first external connection terminal 23 to the second end side in the longitudinal direction.

Further, in the plan view of the state that the fuse unit 1 is installed to the battery 7 via the battery terminal 27, as illustrated in Fig. 17, the wire placing portion 87 of the first external connection terminal 23 and the protective wall portion 89 standing from the wire placing portion 87 of the first external connection terminal 23 are positioned outside the recess portion 5 of the battery 7 (protruding from the second end side of the recess portion 5 in the longitudinal direction), and the fuse portion 25 and the element cover 93 are positioned outside the recess portion 5 of the battery 7 (protruding from the second end portion side of the recess portion 5 in the lateral direction).

Further, in the state where the fuse unit 1 is installed to the battery 7 via the battery terminal 27, in the height direction, the battery connection portion 21 and the second external connection terminal 65 are positioned between the upper face 15 of the battery 7 and the bottom face 13 of the recess portion 5, and the fuse portion 25, the element cover providing portion 91, the element cover 93, and the first external connection terminal 23 are positioned above the upper face 15 of the battery 7.

After the battery terminal 27 and the fuse unit 1 are installed to the battery 7, the wires (not illustrated) is to be connected to the fuse unit 1. Connecting the wire to the first external connection terminal 23 is carried out by passing the stud bolt 81 of the first external connection terminal 23 through a through hole of a round crimp-type terminal formed at an end portion of the wire, screwing a nut (not illustrated) to the stud bolt 81, tightening the nut, and then tightening the round crimp-type terminal by the nut and the busbar 55. Connecting the wire to the second external connection terminal 65 is carried out in a manner same as that of the connecting the wire to the first external connection terminal 23.

In the state where the wires are connected to the fuse unit 1 installed to the battery 7 via the battery terminal 27, the wires are placed at the wire placing portions 87 inside the protective wall portions 89 and extend in directions same as directions of the wire placing portions 87. Further, the wire extending from the second external connection terminal 65 is positioned between the bottom face 13 of the recess portion 5 of the battery 7 and the upper face 15 of the battery 7 in the height direction.

It is so configured that an electric instrument such as an illumination of the vehicle is connected to the second external connection terminal 65 via a fuse box (not illustrated).

According to the fuse unit 1, when the fuse unit 1 is installed to the battery 7, the first external connection terminal 23 is positioned above the upper face 15 of the battery 7 and is positioned, in plan view, within the periphery of the battery 7, and the fuse portion 25 is positioned above the upper face 15 of the battery 7 and is positioned, in plan view, inside the periphery of the battery 7. Thus, at least either one of the fuse portion 25 and the first external connection terminal 23 can be positioned outside the recess portion 5 of the battery 7 in plan view. By this, the recess portion 5 of the battery 7 can have a sufficient space, and therefore the protrusion amount of the fuse unit 1 from the side face 17 of the battery 7 can be reduced as much as possible when the fuse unit 1 is installed to the battery 7.

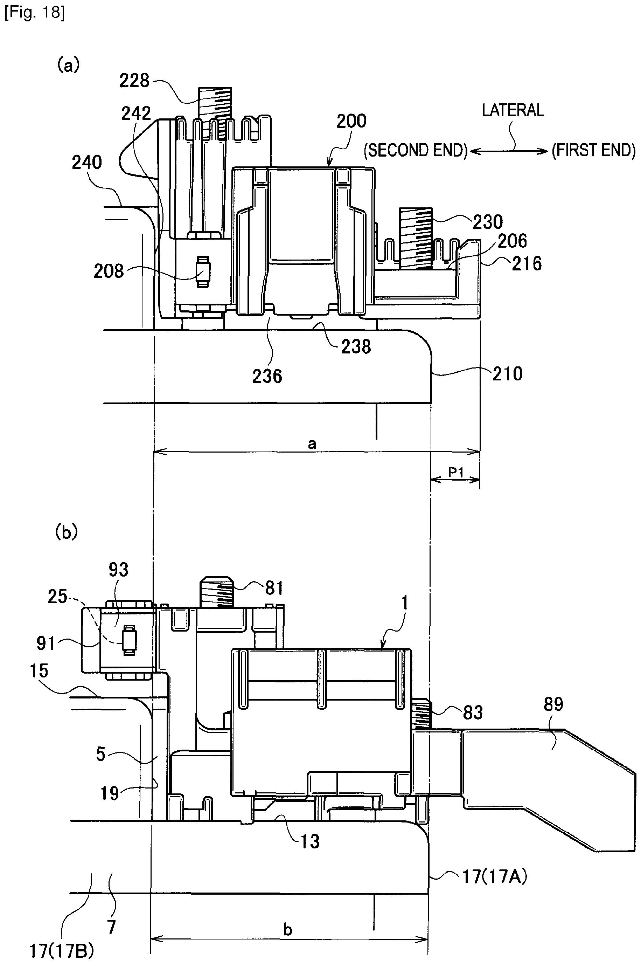

That is, in Fig. 18(a) illustrating the state where the conventional fuse unit 200 is installed to the battery 210, the fuse portion 208 is positioned inside the recess portion 236. Thus, a distance a from the side face 242 of the recess portion 236 of the battery 210 to an end of the second external connection terminal 206 is larger than the dimension of the recess portion 236. As such, the conventional fuse unit 200 protrudes from the side face of the battery 210 by an amount equivalent to a dimension P1.

Contrary to the above, in Fig. 18(b) illustrating the state where the fuse unit 1 according to the embodiment is installed to the battery 7, the fuse portion 25 is disposed above the upper face 15 of the battery 7. Thus, the fuse portion 25 can be positioned outside the recess portion 5 of the battery 7, and a distance b from the side face 19 of the recess portion 5 of the battery 7 to the second external connection terminal 65 is substantially equal to the dimension of the recess portion 5. As such, the protrusion of the fuse unit 1 from the side face 17 of the battery 7 can be avoided.

Further, in Fig. 18(b), the wire placing portion 87 and the protective wall portion 89 (of the wire placing portion 87) which are provided to the second external connection terminal 65 protrude from the side face 17 of the battery 7. However, the above protrusion can be avoided or reduced by changing the form of each of the wire placing portion 87 and the protective wall portion 89 (of the wire placing portion 87). For example, in Fig. 17, the wire placing portion 87 and the protective wall portion 89 (of the wire placing portion 87) which are provided to the second external connection terminal 65 may be turned by 90 degrees clockwise around a center axis of the stud bolt 83 of the second external connection terminal 65.

Further, by the fuse unit 1, since the fuse portion 25 is disposed above the upper face 15 of the battery 7 in the fuse unit 1, visibility of the fuse portion 25 has been improved.

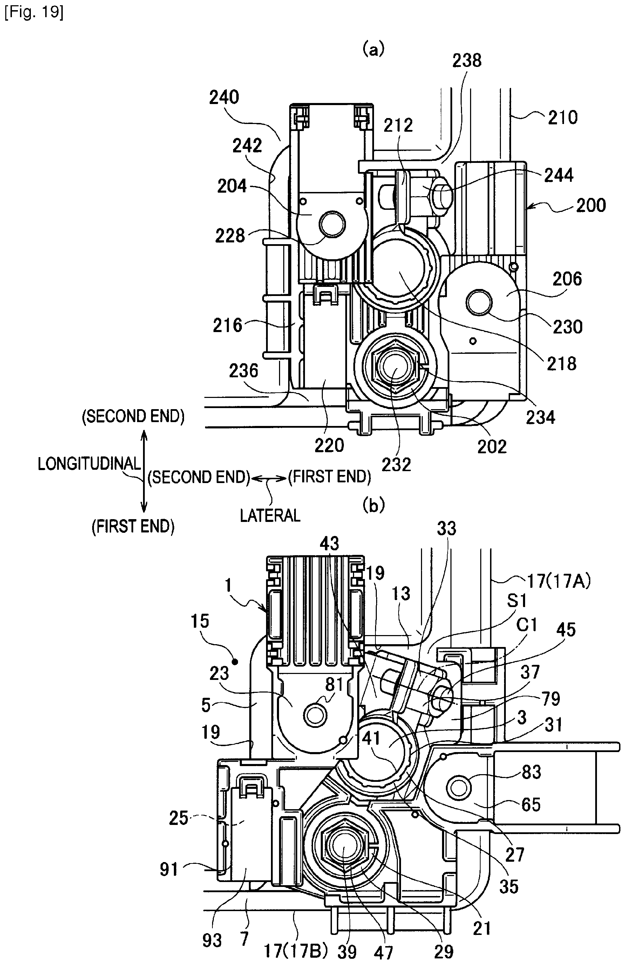

Further, with the fuse unit 1, in the plan view of the state where the fuse unit 1 is installed to the battery 7 via the battery terminal 27, since the battery terminal 27 is inclined to the side face 17 of the battery 7, a space S1 is provided in the periphery of the tightening portion 33 (nut 37) of the battery terminal 27 (see Figs. 17 and 19(b)), workability of mounting the battery terminal 27 to the battery 7 has been improved.

That is, by the conventional fuse unit 200, when the battery 210 is mounted without making the battery terminal 212 inclined (see Fig. 19(a)), the nut 244 as part of a tightening portion of the battery terminal 212 comes close to the side face 242 of the recess portion 236 of the battery 210, thus making the side face 242 an obstacle and thereby making it difficult to engage the tool (for turning the nut 244) with the nut 244.

Meanwhile, according to the present embodiment, the battery terminal 27 is inclined to the side face 17 of the battery 7. Thus, as illustrated in Fig. 19(b), the space S1 is provided between the nut 37 and the side face 19 of the recess portion 5 of the battery 7, thereby making it easy to engage the tool with the nut 37 for turning the nut 37.

According to the present embodiment, the fuse portion 25 of the fuse unit 1 is disposed above the upper face 15 of the battery 7 (see Fig. 18(b)) and the fuse portion 25 of the fuse unit 1 is disposed outside the recess portion 5 (see Fig. 19(b)). Thus, the battery terminal 27 can be inclined. That is, the fuse unit joint portion 29 of the battery terminal 27 and the battery connection portion 21 of the fuse unit 1 can be positioned more toward the side face 19 of the recess portion 5 of the battery 7 (see Fig. 19(b)) than accomplished by the conventional fuse unit 200 (see Fig. 19(a)).

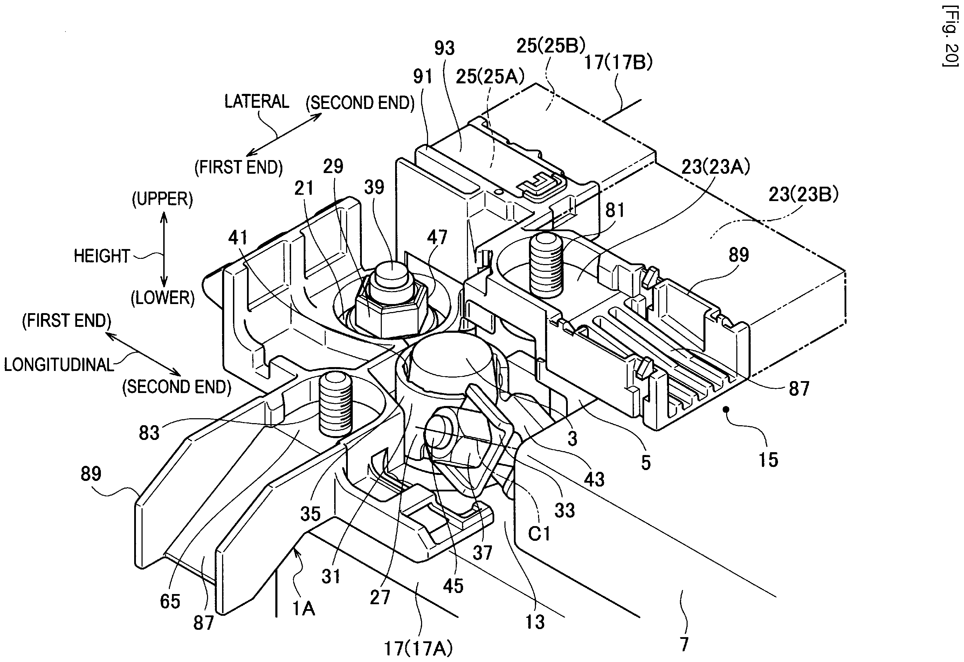

Further, as a fuse unit 1A according to a modified example of the embodiment, as illustrated in Fig. 20, two or more fuse portions 25 (25A, 25B) and two or more first external connection terminals 23 (23A, 23B) may be provided.

In this way, the fuse unit 1A where the fuse portions 25 (25A, 25B) and the first external connection terminals 23 (23A, 23B) are provided has such a structure that the fuse portions 25 (25A, 25B) are so disposed as to be arranged in a predetermined direction (lateral direction) at a predetermined interval mutually, and likewise, the first external connection terminals 23 (23A, 23B) are so disposed as to be arranged in a predetermined direction (lateral direction) at a predetermined interval mutually. Further, the extension directions of the wires connected to the respective first external connection terminals 23 (23A, 23B) become the longitudinal direction and substantially parallel with each other.

Further, when the fuse unit 1A where the fuse portions 25 (25A, 25B) and the first external connection terminals 23 (23A, 23B) are disposed is mounted to the battery 7, the respective fuse portions 25 (25A, 25B) are arranged along the second side face 17B of the battery 7 in the vicinity of the second side face 17B of the battery 7, while the respective first external connection terminals 23 (23A, 23B) are arranged along the second side face 17B of the battery 7 in a position away by a predetermined distance from the second side face 17B of the battery 7. Further, the extension directions of the wires connected to the respective first external connection terminals 23 (23A, 23B) are orthogonal to the second side face 17B. Further, the extension directions of the wires connected to the respective first external connection terminals 23 (23A, 23B) may intersect diagonally with the second side face 17B.

In other words, in the state where the fuse unit 1A is mounted to the battery 7, the respective fuse portions 25 (25A, 25B) are provided slightly away from the upper face 15 of the battery 7 above the upper face 15 of the battery 7, and are arranged slightly away from a boundary (ridge line) between the second side face 17B of the battery 7 and the upper face 15 of the battery 7 and in parallel with the ridge line. Further, the respective fuse portions 25 (25A, 25B) are arranged in the lateral direction from the place close to the battery connection portion 21 toward an opposite side of the battery 7 (a side opposite to a side where the fuse unit 1A is provided).

In the state where the fuse unit 1A is mounted to the battery 7, the respective first external connection terminals 23 (23A, 23B) are provided slightly away from the upper face 15 of the battery 7 above the upper face 15 of the battery 7, and are arranged away from the boundary (ridge line) between the second side face 17B of the battery 7 and the upper face 15 of the battery 7 by a predetermined distance and in parallel with the ridge line. Further, the respective first external connection terminals 23 (23A, 23B) are arranged from the place close to the battery connection portion 21 toward the opposite side of the battery 7 (the side opposite to the side where the fuse unit 1A is provided) in the lateral direction.

The first external connection terminals 23 (23A, 23B) are electrically connected with the battery connection portion 21 via the respective fuse portions 25 (25A, 25B). For example, the first external connection terminal 23A is eclectically connected with the battery connection portion 21 via only the fuse portion 25A while the first external connection terminal 23B is electrically connected with the battery connection portion 21 via only the fuse portion 25B.

The first external connection terminal 23A is positioned in a place closer to the battery connection portion 21 and the first external connection terminal 23B is adjacent to the first external connection terminal 23A. The first fuse portion 25A is positioned in a place closer to the battery connection portion 21 and the fuse portion 25B is adjacent to the fuse portion 25A.

The wires connected to the first external connection terminals 23 (23A, 23B) extend in such a manner as to be orthogonal to the second side face 17B of the battery 7. The wires connected to the first external connection terminals 23 (23A, 23B) extend toward the opposite side face side of the battery 7 (a side face opposite to the second side face 17B).

According to the fuse unit 1A, when the fuse unit 1A is installed to the battery 7, the first external connection terminals 23 (23A, 23B) are positioned above the upper face 15 of the battery 7 and the fuse portions 25 (25A, 25B) are positioned above the upper face 15 of the battery 7. Thus the number of first external connection terminals 23 (23A, 23B) and the number of fuse portions 25 (25A, 25B) can be increased without the need of significantly changing the configuration of the fuse unit 1A.

That is, in the conventional fuse unit 200 as illustrated in Fig. 4, since the fuse portion 208 is close to the side face 242 of the recess portion 236 of the battery 210, the space is insufficient, and thus it cannot easily increase the number of fuse portions 208.

Contrary to this, with the fuse unit 1A according to the modified example of the embodiment; as illustrated in Fig. 20, for example, when the number of the fuse portions 25 (25A, 25B) is made to be two and the number of the first external connection terminals 23 (23A, 23B) is made to be two, the fuse portions 25 (25A, 25B) and the first external connection terminals 23 (23A, 23B) each may be increased to two by arranging them horizontally (lateral direction). Thus, it is not necessary to change the configuration of the other portion of the fuse unit 1A (the battery connection portion 21 or the second external connection terminal 65). Therefore, according to the fuse unit 1A, it is easy to increase the number of the first external connection terminals 23 (23A, 23B) and the number of the fuse portions 25 (25A, 25B).

Further, according to the fuse unit 1A, in the state where the fuse unit 1A is installed to the battery 7, the fuse portions 25 (25A, 25B) are arranged along the second side face 17B of the battery 7 and the extension directions of the wires connected to the respective first external connection terminals 23 (23A, 23B) are made orthogonal to the second side face 17B of the battery 7. Thus, in the fuse unit 1A also, the visibility of the fuse portions 25 (25A, 25B) can be improved and connecting of the wires can be facilitated.

### Industrial Applicability

In a fuse unit mounted for use with a battery where a battery post is provided at a place one step lower than an upper face of the battery, a protrusion amount of the fuse unit from a side face of the battery can be reduced as much as possible when the fuse unit is installed to the battery.

## Claims

1. A combination of a fuse unit (1), a battery (7) and a battery terminal (27),
wherein the fuse unit (1) is mounted for use with the battery (7) having a battery post (3) disposed at a recess portion (5) of the battery (7) which is one step lower than an upper face (15) of the battery (7), the recess portion (5) having a bottom face (13), the fuse unit (1) comprising:
a battery connection portion (21) connected to the battery post (3);
one or more external connection terminals (23) each to be connected to an electric instrument; and
one or more fuse portions (25) connecting the battery connection portion (21) with the respective external connection terminals (23), wherein
the one or more external connection terminals (23) and the one or more fuse portions (25) are positioned above the upper face (15) of the battery (7) and positioned within the periphery of the battery (7) in plan view when the battery connection portion (21) is connected to the battery post(3), and
the fuse unit (1) is so configured as to be mounted to the battery (7) via the battery terminal (27),
**characterized in that**
in a plan view of a state where the fuse unit (1) is mounted to the battery (7) via the battery terminal (27), the battery terminal (27) is inclined to a side face (17) of the battery (7), and
the battery terminal (27) is positioned between the bottom face (13) of the recess portion (5) of the battery (7) and the upper face (15) of the battery (7) in the height direction.

2. The combination according to claim 1, wherein
the fuse unit (1) comprises two or more of the fuse portions (25) and two or more of the external connection terminals (23),
the respective two or more fuse portions (25) are arranged in a predetermined direction,
the respective two or more external connection terminals (23) are arranged in the predetermined direction, and
extension directions of wires connected to the respective external connection terminals (23) are substantially parallel with each other.

3. The combination according to claim 2, wherein
in a state where the fuse unit (1) is mounted to the battery (7), the respective two or more fuse portions (25) are arranged along a side face (17) of the battery (7) and the extension directions of the wires are orthogonal to the side face (17).

## Patentansprüche

1. Kombination einer Sicherungseinheit (1), einer Batterie (7) und eines Batterieanschlusses (27),
wobei die Sicherungseinheit (1) zur Verwendung mit der Batterie (7) montiert ist, die einen Batteriepol (3) hat, der an einem Aussparungsbereich (5) der Batterie (7) angeordnet ist, der einen Schritt tiefer als eine obere Fläche (15) der Batterie (7) ist, wobei der Aussparungsbereich (5) eine untere Fläche (13) hat, wobei die Sicherungseinheit (1) umfasst:
einen Batterie-Verbindungsbereich (21), der mit dem Batteriepol (3) verbunden ist;
einen oder mehrere externe Verbindungsanschlüsse (23), die jeweils mit einem elektrischen Instrument zu verbinden sind; und
einen oder mehrere Sicherungsbereiche (25), die den Batterie-Verbindungsbereich (21) mit den jeweiligen externen Verbindungsanschlüssen (23) verbinden, wobei
der eine oder mehrere externe Verbindungsanschlüsse (23) und der eine oder mehrere Sicherungsbereiche (25) oberhalb der oberen Fläche (15) der Batterie (7) angeordnet sind und innerhalb der Peripherie der Batterie (7) in der Draufsicht angeordnet sind, wenn der Batterie-Verbindungsbereich (21) mit dem Batteriepol (3) verbunden ist, und
die Sicherungseinheit (1) so konfiguriert ist, dass sie an der Batterie (7) über den Batterieanschluss (27) montiert wird,
**dadurch gekennzeichnet, dass**
in einer Draufsicht eines Zustands, wo die Sicherungseinheit (1) an der Batterie (7) über den Batterieanschluss (27) montiert ist, der Batterieanschluss (27) zu einer Seitenfläche (17) der Batterie (7) geneigt ist, und
der Batterieanschluss (27) zwischen der unteren Fläche (13) des Aussparungsbereichs (5) der Batterie (7) und der oberen Fläche (15) der Batterie (7) in der Höhenrichtung angeordnet ist.

2. Kombination nach Anspruch 1, wobei
die Sicherungseinheit (1) zwei oder mehr von den Sicherungsbereichen (25) und zwei oder mehr von den externen Verbindungsanschlüssen (23) umfasst,
die jeweiligen zwei oder mehr Sicherungsbereiche (25) in einer vorbestimmten Richtung angeordnet sind,
die jeweiligen zwei oder mehr externen Verbindungsanschlüsse (23) in der vorbestimmten Richtung angeordnet sind, und
Erstreckungsrichtungen von Drähten, die mit den jeweiligen externen Verbindungsanschlüssen (23) verbunden sind, im Wesentlichen parallel zueinander sind.

3. Kombination nach Anspruch 2, wobei
in einem Zustand, wo die Sicherungseinheit (1) an der Batterie (7) montiert ist, die jeweiligen zwei oder mehr Sicherungsbereiche (25) entlang einer Seitenfläche (17) der Batterie (7) angeordnet sind und die Erstreckungsrichtungen der Drähte senkrecht zu der Seitenfläche (17) sind.

## Revendications

1. Combinaison d'une unité de fusible (1), d'une batterie (7) et d'une borne de batterie (27),
dans laquelle l'unité de fusible (1) est montée pour utilisation avec la batterie (7) possédant un pôle de batterie (3) disposé dans une portion à évidement (5) de la batterie (7) qui est plus basse d'un niveau qu'une face supérieure (15) de la batterie (7), la portion à évidement (5) possédant une face inférieure (13), l'unité de fusible (1) comprenant :
une portion de connexion de batterie (21) connectée au pôle de batterie (3) ;
une ou plusieurs bornes de connexion externes (23), chacune destinée à être connectée à un instrument électrique ; et
une ou plusieurs portions de fusible (25) connectant la portion de connexion de batterie (21) aux bornes de connexion externes (23) respectives, dans laquelle
les une ou plusieurs bornes de connexion externes (23) et les une ou plusieurs portions de fusible (25) sont positionnées au-dessus de la face supérieure (15) de la batterie (7) et positionnées au sein de la périphérie de la batterie (7) en vue en plan lorsque la portion de connexion de batterie (21) est connectée au pôle de batterie (3), et
l'unité de fusible (1) est configurée afin d'être montée sur la batterie (7) par l'intermédiaire de la borne de batterie (27),
**caractérisée en ce que**
en vue en plan d'un état où l'unité de fusible (1) est montée sur la batterie (7) par l'intermédiaire de la borne de batterie (27), la borne de batterie (27) est inclinée vers une face latérale (17) de la batterie (7), et
la borne de batterie (27) est positionnée entre la face inférieure (13) de la portion à évidement (5) de la batterie (7) et la face supérieure (15) de la batterie (7) dans la direction de hauteur.

2. Combinaison selon la revendication 1, dans laquelle
l'unité de fusible (1) comprend deux ou plus des portions de fusible (25) et deux ou plus des bornes de connexion externes (23),
les deux ou plus portions de fusible (25) respectives sont agencées dans une direction prédéterminée,
les deux ou plus bornes de connexion externes (23) respectives sont agencées dans la direction prédéterminée, et
des directions d'extension de fils connectés aux bornes de connexion externes (23) respectives sont sensiblement parallèles les unes avec les autres.

3. Combinaison selon la revendication 2, dans laquelle
dans un état où l'unité de fusible (1) est montée sur la batterie (7), les deux ou plus portions de fusible (25) respectives sont agencées le long d'une face latérale (17) de la batterie (7) et les directions d'extension des fils sont orthogonales à la face latérale (17).
